# EUROPEAN PATENT APPLICATION

(11) **EP 4 329 130 A1**
(43) Date of publication of application: **28.02.2024**
(21) Application number: 22203910.9
(22) Date of filing: 26.10.2022
(51) Int. Cl.: H02J 3/30, H02J 15/00, H02K 7/02, H02K 53/00

(54) **INERTIAL FLYWHEEL MAGNETIC ENERGY SELF-CIRCULATING GENERATOR**

(30) Priority: 26.08.2022 CN 202211035181
(71) Applicant: Ning, Gaofeng, Taian City Shandong Province (CN)
(72) Inventor: Ning, Gaofeng, Taian City Shandong Province (CN)
(74) Representative: Cabinet Chaillot

(57) **Abstract**

The invention discloses an inertial flywheel magnetic energy self-circulating generator, wherein the first intelligent charging controller is connected to the input ends of the first energy storage battery and the second energy storage battery and intelligently selects one to input current; the second intelligent power supply controller is connected to the output ends of the first energy storage battery and the second energy storage battery and intelligently selects one to output current; the output end of the second intelligent power supply controller is connected to the inverter; the inverter converts the direct current output from the first energy storage battery into alternating current; the output end of the inverter is connected to the motor; the output end of the motor is connected to a transmission shaft through an input coupling to drive the flywheel; the flywheel component is connected to the generator, the output end of the generator is connected to the voltage stabilizer, and the output end of the voltage stabilizer is connected to the rectifier; the rectifier converts the stabilized alternating current into direct current, and inputs the direct current into the first intelligent charging controller. The whole device has the advantages of simple structure, practicality, low maintenance and low cost.

## Description

### FIELD OF THE INVENTION

The invention relates to the technical field of generators, in particular to an inertial flywheel magnetic energy self-circulating generator.

### BACKGROUND OF THE RELATED ART

With the rapid development of industry and agriculture around the world, energy is becoming increasingly scarce, and electricity demand is increasing day by day. At present, most of the power generation comes from coal, gas and water conservancy energy, and its one-time investment in power generation is relatively large. Moreover, water conservancy has an uncertain impact on the natural environment; water storage and dam construction inundate a large amount of land, and water conservancy resources are limited. Coal and gas are increasingly in short supply, and the large-scale use is seriously polluting. Nuclear power plants have hidden safety hazards; solar energy is affected by natural weather; wind turbines are not only affected by natural weather but also by geographical areas, and are generally installed in plateau areas. The above power generation methods are limited by the power transmission and transformation capacity, and cannot meet the growing demand for electricity.

Therefore, how to provide an inertial flywheel magnetic energy self-circulating generator has become an urgent problem to be solved.

### SUMMARY OF THE INVENTION

The purpose of the present invention is to provide an inertial flywheel magnetic energy self-circulating generator, which drives the flywheel to rotate through the power supply of the battery, relies on the inertial rotational motion of the flywheel to generate electricity, and then supplies power to another battery, which can switch the power supply at any time. At the same time, the electricity generated by inertial motion is sufficient for household use.

In order to realize the above purpose, the technical solutions provided by the invention are: an inertial flywheel magnetic energy self-circulating generator, comprising a distribution box, a voltage stabilizer, a generator, a flywheel component, and a motor; the distribution box is provided with a rectifier, a first intelligent charging controller, a second intelligent power supply controller, a first energy storage battery, a second energy storage battery, and an inverter; the first intelligent charging controller is connected to the input ends of the first energy storage battery and the second energy storage battery and intelligently selects one to input current; the second intelligent power supply controller is connected to the output ends of the first energy storage battery and the second energy storage battery and intelligently selects one to output current; the output end of the second intelligent power supply controller is connected to the inverter; the inverter converts the direct current output from the first energy storage battery into alternating current; the output end of the inverter is connected to the motor; the output end of the motor is connected to a transmission shaft through an input coupling to drive the flywheel; the flywheel component is connected to the generator, the output end of the generator is connected to the voltage stabilizer, and the output end of the voltage stabilizer is connected to the rectifier; the rectifier converts the stabilized alternating current into direct current, and inputs the direct current into the first intelligent charging controller.

As an improvement, the flywheel component comprises an input coupling, a transmission shaft, a bearing, a flywheel, and an output coupling; the output end of the motor is connected to the transmission shaft through the input coupling to drive the flywheel; both sides of the flywheel are provided with a bearing; the flywheel is connected to the input end of the generator through the output coupling, and drives the generator to generate electricity through the inertial rotational motion of the flywheel.

As an improvement, the flywheel is surrounded by magnets, and the side of the flywheel is provided with a coil magnetic device; the coil magnetic device is electrically connected to the voltage stabilizer.

As an improvement, the output end of the voltage stabilizer is connected to household power.

As an improvement, two flywheels are provided; a gap is left between the two flywheels, and the two flywheels are coaxially connected.

Compared with the prior art, the advantages of the invention are: the invention drives the flywheel to move by supplying power to the motor by the two batteries' alternative work, and drives the generator to generate electricity by relying on the rotational inertia of the flywheel; the generated electricity is used to charge the consumed battery and connect to household power for home use; the whole device has the advantages of simple structure, practicality, low maintenance and low cost.

### BRIEF DESCRIPTION OF THE DRAWINGS

FIG. 1 is a first structural schematic diagram of the inertial flywheel magnetic energy self-circulating generator according to the invention.
FIG. 2 is a second structural schematic diagram of the inertial flywheel magnetic energy self-circulating generator according to the invention.

As shown in the figures, 1 refers to the distribution box; 2 refers to the voltage stabilizer; 3 refers to the generator; 4 refers to the motor; 5 refers to the rectifier; 6 refers to the first intelligent charging controller; 7 refers to the second intelligent power supply controller; 8 refers to the first energy storage battery; 9 refers to the second energy storage battery; 10 refers to the inverter; 11 refers to the input coupling; 12 refers to the flywheel; 13 refers to the output coupling; 14 refers to the bearing; 15 refers to the magnet; 16 refers to the coil magnetic device; 17 refers to the household power; 18 refers to the transmission shaft.

### DETAILED DESCRIPTION OF THE PREFERRED EMBODIMENTS

The embodiments of the invention are described in detail hereafter. Examples of the embodiments are shown in the accompanying drawings, in which the same or similar reference numerals indicate the same or similar elements or elements with the same or similar functions. In the description of the invention, it should be understood that the orientation or positional relationship indicated by the terms "upper", "lower", "front", "back, "left", "right", "inner", "outer", "vertical", "circumferential", "radial", "axial", etc. are based on the orientation or positional relationship shown in the drawings, and is only for the convenience of describing the invention and simplifying the description, but not indicate or imply that the pointed device or element must have a specific orientation, be constructed and operated in a specific orientation, and therefore cannot be understood as a limitation of the invention.

In the description of the invention, "first feature" and "second feature" may include one or more of these features. In addition, the terms "first" and "second" are only used for descriptive purposes, and cannot be understood as indicating or implying relative importance or implicitly indicating the number of indicated technical features. Thus, the features defined with "first" and "second" may explicitly or implicitly include one or more of these features.

In the invention, unless otherwise clearly defined and limited, the terms "provided", "sleeved", "connected", "through", "plug" and other terms should be interpreted broadly; for example, it can be a fixed connection, it can be a detachable connection, or integrated; it can be a mechanical connection or an electrical connection; it can be a direct connection, or an indirectly connection through an intermediate medium, and it can be an internal communication between two elements or the interaction relationship between two elements, unless specifically defined otherwise. For those of ordinary skill in the art, the specific meaning of the above terms in the invention can be understood according to specific circumstances.

The inertial flywheel magnetic energy self-circulating generator according to the invention will be further described in detail hereinafter with reference to the drawings.

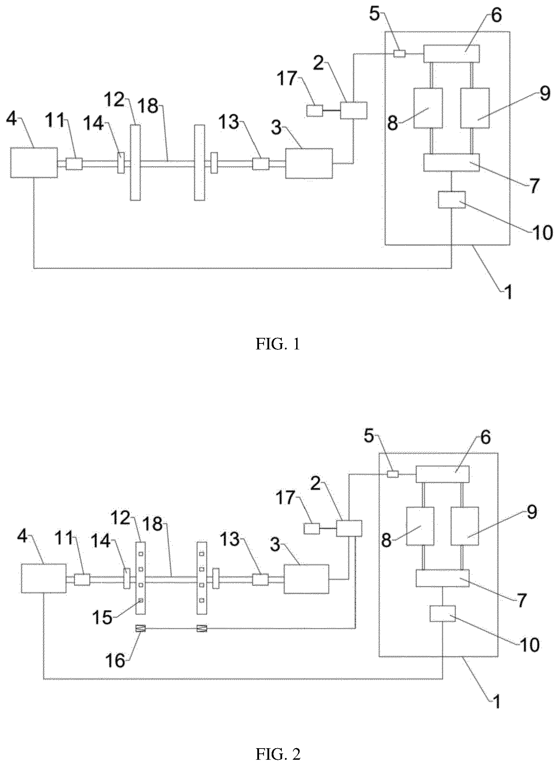

With reference to FIGS. 1-2, the invention will be described in detail.

An inertial flywheel magnetic energy self-circulating generator, comprising a distribution box 1, a voltage stabilizer 2, a generator 3, a flywheel 12 component, and a motor 4; the distribution box 1 is provided with a rectifier 5, a first intelligent charging controller 6, a second intelligent power supply controller 7, a first energy storage battery 8, a second energy storage battery 9, and an inverter 10; the first intelligent charging controller 6 is connected to the input ends of the first energy storage battery 8 and the second energy storage battery 9 and intelligently selects one to input current; the second intelligent power supply controller 7 is connected to the output ends of the first energy storage battery 8 and the second energy storage battery 9 and intelligently selects one to output current; the output end of the second intelligent power supply controller 7 is connected to the inverter 10; the inverter 10 converts the direct current output from the first energy storage battery 8 into alternating current; the output end of the inverter 10 is connected to the motor 4; the output end of the motor 4 is connected to a transmission shaft 18 through an input coupling 11 to drive the flywheel 12; the flywheel 12 component is connected to the generator 3, the output end of the generator 3 is connected to the voltage stabilizer 2, and the output end of the voltage stabilizer 2 is connected to the rectifier 5; the rectifier 5 converts the stabilized alternating current into direct current, and inputs the direct current into the first intelligent charging controller 6.

The flywheel 12 component comprises an input coupling 11, a transmission shaft 18, a bearing 14, a flywheel 12, and an output coupling 13; the output end of the motor 4 is connected to the transmission shaft 18 through the input coupling 11 to drive the flywheel 12; both sides of the flywheel 12 are provided with a bearing 14; the flywheel 12 is connected to the input end of the generator 3 through the output coupling 13, and drives the generator 3 to generate electricity through the inertial rotational motion of the flywheel 12.

The flywheel 12 is surrounded by magnets 15, and the side of the flywheel 12 is provided with a coil magnetic device 16; the coil magnetic device 16 is electrically connected to the voltage stabilizer 2.

The output end of the voltage stabilizer 2 is connected to household power 17.

Two flywheels 12 are provided; a gap is left between the two flywheels 12, and the two flywheels 12 are coaxially connected.

The specific implementation process of the inertial flywheel magnetic energy self-circulating generator according to the invention is as follows:

### Embodiment 1

With reference to FIG. 1, the distribution box 1 is provided with a rectifier 5, a first intelligent charging controller 6, a second intelligent power supply controller 7, a first energy storage battery 8, a second energy storage battery 9, and an inverter 10; the first energy storage battery 8 and the second energy storage battery 9 are both fully charged, and the second intelligent power supply controller 7 select one to supply power to the motor 4; the motor 4 is connected to the transmission shaft 18 through the input coupling 11 to drive the flywheel 12 to rotate; two flywheels 12 are provided and they move coaxially, and a gap is left therebetween; the flywheel 12 has great inertia after rotating, and the output coupling 13 transmits the inertial motion to the generator 3, which drives the generator 3 to generate electricity; the electricity generated by the generator 3 is stabilized by the voltage stabilizer 2, and part of it is connected to the household power 17 for home use, and the other part enters the distribution box 1 and is rectified into direct current by the rectifier 5, and then the first intelligent charging controller 6 selects the first energy storage battery 8 or the second energy storage battery 9 for charging; when the electric energy stored in the first energy storage battery 8 is consumed, the second intelligent power supply controller 7 controls the discharge of the second energy storage battery 9 to provide power for the motor 4; the cycle is repeated to realize the cyclic charge and discharge of the two batteries.

### Embodiment 2

With reference to FIG. 1, the distribution box 1 is provided with a rectifier 5, a first intelligent charging controller 6, a second intelligent power supply controller 7, a first energy storage battery 8, a second energy storage battery 9, and an inverter 10; the first energy storage battery 8 and the second energy storage battery 9 are both fully charged, and the second intelligent power supply controller 7 select one to supply power to the motor 4; the motor 4 is connected to the transmission shaft 18 through the input coupling 11 to drive the flywheel 12 to rotate; two flywheels 12 are provided and they move coaxially, and a gap is left therebetween; each flywheel 12 is provided with magnets 15, and the side of the flywheel 12 is provided with a coil magnetic device 16; through the rotation of the flywheel 12, the magnets 15 and the coil magnetic device 16 are moved relative to each other; the magnetic induction line is cut to generate electricity, and the electricity is sent to the voltage stabilizer 2 for voltage stabilization, thereby further increasing the power generation; the flywheel 12 has great inertia after rotating, and the output coupling 13 transmits the inertial motion to the generator 3, which drives the generator 3 to generate electricity; the electricity generated by the generator 3 is stabilized by the voltage stabilizer 2, and part of it is connected to the household power 17 for home use, and the other part enters the distribution box 1 and is rectified into direct current by the rectifier 5, and then the first intelligent charging controller 6 selects the first energy storage battery 8 or the second energy storage battery 9 for charging; when the electric energy stored in the first energy storage battery 8 is consumed, the second intelligent power supply controller 7 controls the discharge of the second energy storage battery 9 to provide power for the motor 4; the cycle is repeated to realize the cyclic charge and discharge of the two batteries.

The invention and the embodiments thereof are described hereinabove, and this description is not restrictive. What is shown in the drawings is only one of the embodiments of the invention, and the actual structure is not limited thereto. All in all, structural methods and embodiments similar to the technical solution without deviating from the purpose of the invention made by those of ordinary skill in the art without creative design shall all fall within the protection scope of the invention.

## Claims

1. An inertial flywheel magnetic energy self-circulating generator, comprising a distribution box (1), a voltage stabilizer (2), a generator (3), a flywheel (12) component, and a motor (4); the distribution box (1) is provided with a rectifier (5), a first intelligent charging controller (6), a second intelligent power supply controller (7), a first energy storage battery (8), a second energy storage battery (9), and an inverter (10); the first intelligent charging controller (6) is connected to the input ends of the first energy storage battery (8) and the second energy storage battery (9) and intelligently selects one to input current; the second intelligent power supply controller (7) is connected to the output ends of the first energy storage battery (8) and the second energy storage battery (9) and intelligently selects one to output current; the output end of the second intelligent power supply controller (7) is connected to the inverter (10); the inverter (10) converts the direct current output from the first energy storage battery (8) into alternating current; the output end of the inverter (10) is connected to the motor (4); the output end of the motor (4) is connected to a transmission shaft (18) through an input coupling (11) to drive the flywheel (12); the flywheel (12) component is connected to the generator (3), the output end of the generator (3) is connected to the voltage stabilizer (2), and the output end of the voltage stabilizer (2) is connected to the rectifier (5); the rectifier (5) converts the stabilized alternating current into direct current, and inputs the direct current into the first intelligent charging controller (6).

2. The inertial flywheel magnetic energy self-circulating generator according to claim 1, wherein the flywheel (12) component comprises an input coupling (11), a transmission shaft (18), a bearing (14), a flywheel (12), and an output coupling (13); the output end of the motor (4) is connected to the transmission shaft (18) through the input coupling (11) to drive the flywheel (12); both sides of the flywheel (12) are provided with a bearing (14); the flywheel (12) is connected to the input end of the generator (3) through the output coupling (13), and drives the generator (3) to generate electricity through the inertial rotational motion of the flywheel (12).

3. The inertial flywheel magnetic energy self-circulating generator according to claim 2, wherein the flywheel (12) is surrounded by magnets (15), and the side of the flywheel (12) is provided with a coil magnetic device (16); the coil magnetic device (16) is electrically connected to the voltage stabilizer (2).

4. The inertial flywheel magnetic energy self-circulating generator according to claim 3, wherein the output end of the voltage stabilizer (2) is connected to household power (17).

5. The inertial flywheel magnetic energy self-circulating generator according to claim 4, wherein two flywheels (12) are provided; a gap is left between the two flywheels (12), and the two flywheels (12) are coaxially connected.
